# EUROPÄISCHE PATENTSCHRIFT

(11) **EP 0 432 408 B1**
(45) Veröffentlichungstag und Bekanntmachung des Hinweises auf die Patenterteilung: **04.01.1995**
(21) Anmeldenummer: 90119776.4
(22) Anmeldetag: 15.10.1990
(51) Int. Cl.: F16N 15/02, B23Q 11/10

(54) **Vorrichtung zum Auftragen von graphithaltigen Schmiermittelsuspensionen**
Device for application of a lubricant suspension containing graphite
Dispositif pour appliquer une suspension de lubrifiant contenant du graphite

(30) Priorität: 15.11.1989 CH 4112/89
(43) Veröffentlichungstag der Anmeldung: 19.06.1991
(73) Patentinhaber: LONZA A.G., CH-4002 Basel Postfach (CH)
(72) Erfinder: Schmitter, René, FR-Bartenheim (Elsass) (FR); Lanini, Marco, CH-Sins (Kanton Aargau) (CH)
(74) Vertreter: Ebbinghaus, Dieter, Dipl.-Ing.

(56) Entgegenhaltungen:
- DE-A- 3 044 310
- US-A- 2 004 386
- US-A- 3 249 305
- US-A- 3 556 255
- US-A- 4 824 019

## Beschreibung

Die Erfindung betrifft eine Vorrichtung zum Auftragen von graphithaltigen Schmiermittelsuspensionen auf Werkzeugen oder Werkstücken bei der Warmverformung von Metallen mit Sprüheinheiten, die ein Gehäuse mit Produkteinlass, einen Sprühkopf mit einer Lochdüse, eine Verschlusseinrichtung und eine Siebeinrichtung aufweisen.

Aus der EP-A-0 039-839 ist eine Vorrichtung zum Auftragen von graphithaltigen Schmiermittelsuspensionen auf Werkzeuge oder Werkstücke bei der Warmverformung von Metallen bekannt, die einen Sprühkopf besitzt, der ein Gehause mit Produkteinlass, einen Sprühkopf mit einer Lochdüse, eine Verschlusseinrichtung und eine Siebeinrichtung aufweist.

Durch die Ausgestaltung des Sprühkopfes der bekannten Vorrichtung ist es zwar möglich, das Schmiermittel fein zu verteilen. Allerdings kann das Schmiermittel durch die bekannte Vorrichtung nicht dosiert und genau auf die Stellen des Werkstücks oder des Werkzeugs aufgetragen werden, an denen es tatsächlich benötigt wird. Aus diesem Grund wird mit der bekannten Vorrichtung das gesamte Werkzeug oder Werkstück flächendeckend geschmiert, weshalb der Schmiermittelverbrauch hoch ist. Außerdem läßt sich die bekannte Vorrichtung nicht schnell an verschiedene Werkstücke anpassen.

Aus der US 3 556 255 ist eine Vorrichtung zum Auftragen trockenen Schmiermittels auf heisse Schmiedewerkzeuge bekannt, die einen mit einem Druckgas speisbaren Schmiermittelbehälter, eine daran anschließende Kammer zur elektrostatischen Aufladung der Schmiermittelteilchen und eine Düse zum Auftragen der Schmiermittelteilchen aufweist. Diese Vorrichtung ist jedoch nicht zum Auftragen von Schmiermittelsuspensionen geeignet.

Die US 2 004 386 offenbart eine Vorrichtung zum Auftragen einer graphithaltigen Schmiermittelsuspension auf Fahrleitungsdrähte, die einen Vorratsbehälter und eine Druckleitung aufweist, die zu einer Sprühöffnung führt. Bei dieser Vorrichtung stellt sich nicht das Problem, das Schmiermittel dosiert auf verschiedene Stellen auftragen zu müssen, da die Breite des Fahrleitungsdrahtes gering ist.

Der Erfindung lag die Aufgabe zugrunde, mit einfachen konstruktiven Mitteln eine Vorrichtung zu schaffen, die ein kontrolliertes Auftragen von graphithaltigen Schmiermitteln ermöglicht.

Diese Aufgabe wird durch die Vorrichtung zum Auftragen von graphithaltigen Schmiermittelsuspensionen gemäß Patentanspruch 1 gelöst.

Die erfindungsgemäße Vorrichtung ist besonders zum Auftragen von graphithaltigem Schmiermitteln auf die Werkzeuge und Werkstücke beim Warmwalzen von Blechen, Profilen oder Rohren geeignet.

Die Ausgestaltung der Vorrichtung ermöglicht es, das Auftragen von graphithaltigen Schmiermittelsuspensionen so zu steuern, daß die Schmiermittelsuspension genau an den Stellen, an denen sie bei der Warmverformung benötigt wird, gleichmäßig und in der richtigen Menge verteilt wird.

Für die gleichmäßige Verteilung sorgt die erfindungsgemäße Ausgestaltung der Sprüheinheiten. Die mengenmäßige Dosierung wird durch die Steuer- und Verteileinheit ermöglicht, wohingegen die örtliche Flexibilität dadurch erreicht wird, daß der Verteiler in bestimmten Winkeln zu seiner Längsachse drehbar und feststellbar und in Richtung seiner Längsachse verschiebbar ist.

Durch die Gesamtheit der kennzeichnenden Merkmale des Patentanspruchs ist demnach ein kontrolliertes Auftragen von graphithaltigen Schmiermitteln möglich, wobei sich die Vorrichtung schnell an unterschiedliche Werkstücke anpassen läßt. Dadurch, daß die Schmiermittelsuspension genau auf die Stellen aufgetragen werden kann, an denen sie notwendig ist, ist der Verbrauch an Schmiermittelsuspension gering.

Ein Ausführungsbeispiel der Erfindung wird nachstehend anhand der Zeichnungen näher erläutert.
Fig.1 zeigt schematisch ein Beispiel eine erfindungsgemässe Vorrichtung bestehend aus einem Verteiler 1, in Halterungen 3, die drei Sprüheinheiten 2 umfasst.
Fig.2 zeigt schematisch eine erfindungsgemässe Vorrichtung bei welcher mehrere Verteiler 1 in einem Walzgerüst 12 mit einer Steuer- und Verteileinheit 6 und einer Hochdruck- und Filtereinheit 7 verbunden sind.

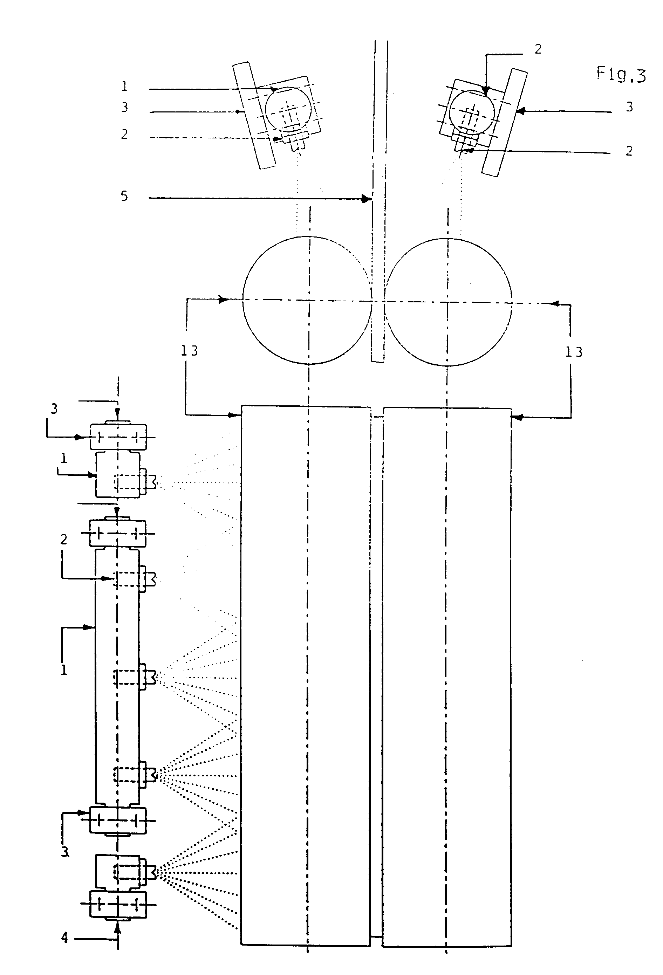

Fig.3 zeigt eine frontale und eine seitliche Ansicht einer erfindungsgemässe Vorrichtung beim Warmwalzen von Blechen.
   - 1: bezeichnet dabei die Verteiler
   - 3: bezeichnet dabei die Halterungen
   - 2: bezeichnet dabei die Sprüheinheiten
   - 13: bezeichnet dabei die Walzen (untere und obere Walze)
   - 5: bezeichnet dabei das Blech
Fig.4 zeigt eine Sprüheinheit im Querschnitt, bestehend aus
   - 1: Verteiler
   - 8: Gehäuse mit Produkteeinlass
   - 9: Sprühkopf mit Lochdüse
   - 11: Siebvorrichtung
   - 10: Verschlussvorrichtung
Fig.5 zeigt eine Sprüheinheit im Querschnitt, bestehend aus
   - 1: einem Verteiler mit 2 Kammern
   die übrigen Bezeichnungen entsprechen Fig.4.

Der Verteiler 1 weist vorteilhaft eine Hohlform auf die z.B. zylindrisch ausgestaltet sein kann.
Die Sprüheinheiten 2 werden zweckmässig über eine Schraubverbindung oder ein geeignetes Kupplungssystem druckfest mit dem Verteiler 1 verbunden.

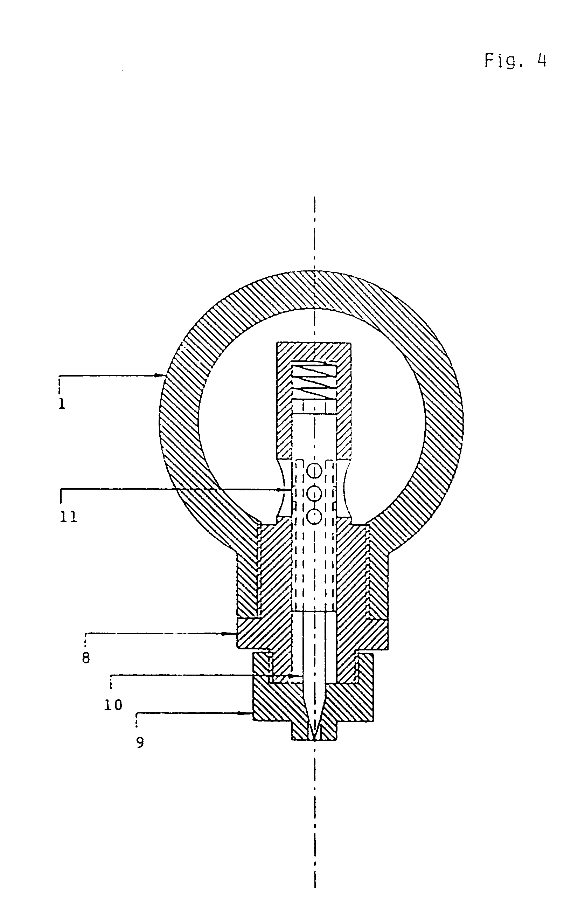

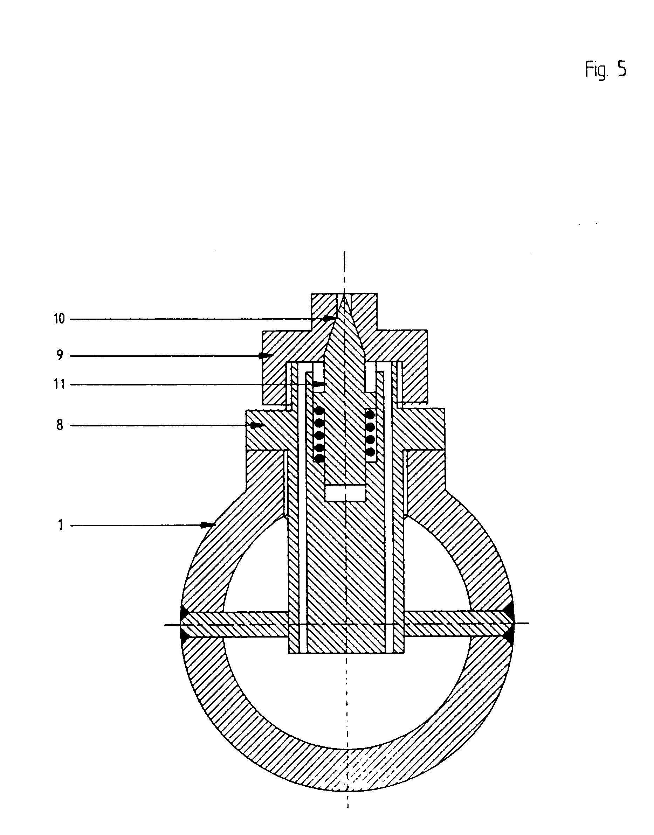

Von den Sprüheinheiten 2 sind zahlreiche Ausführungsformen beschrieben. Zweckmässig werden für die erfindungsgemässe Vorrichtung Sprüheinheiten 2, wie sie z.B. in der DE-C-27 24 931 in der EP-A 39 839 oder in der EP-B-131 120 beschrieben sind, verwendet.Zwei mögliche Ausführungsformen sind in Fig.4 und 5 dargestellt.

Die Anzahl Sprüheinheiten 2 pro Verteiler 1 richtet sich nach dem jeweiligen Einsatz der Vorrichtung.

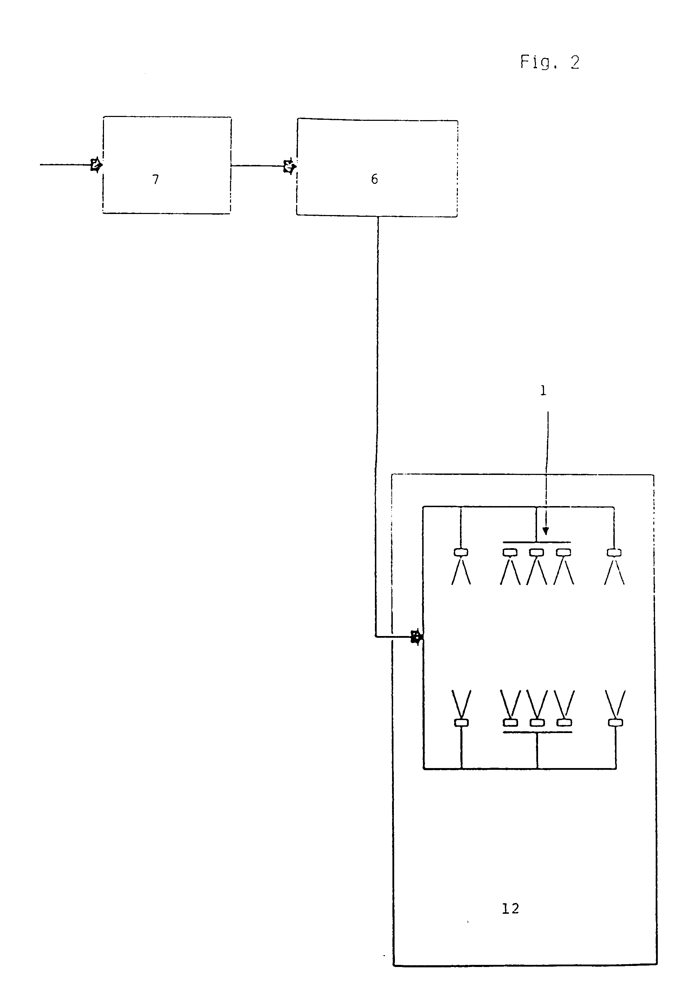

Zum Walzen von Blechen einer Breite von ca. 0,5 m bis 2 m kann beispielsweise eine Anordnung wie sie in Fig.2 dargestellt ist angewendet werden. Pro Walze werden in diesem Beispiel drei Verteiler 1 eingesetzt, wobei zwei äussere Verteiler 1 je eine Sprüheinheit und ein mittlerer Verteiler, drei Sprüheinheiten umfassen.

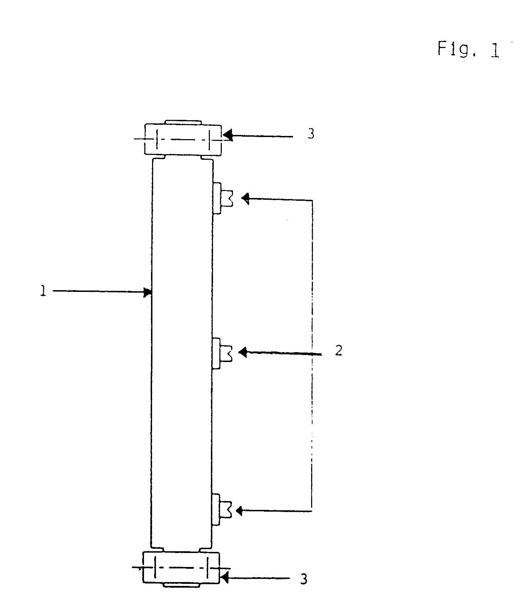

Der Verteiler 1 kann eine oder mehrere Kammern enthalten. Besteht wie in Fig.1 dargestellt der Verteiler 1 aus einer Kammer, werden alle Sprüheinheiten 2 gleichmässig mit der graphithaltigen Schmiermittelsuspension versorgt.

Wie in Fig.5 gezeigt, kann aber der Verteiler auch in mehrere Kammern so unterteilt werden, dass jeder Sprüheinheit oder einer Gruppe von Sprüheinheit eine separate Kammer zukommt.

Mit einer solchen Aufteilung kann erreicht werden, dass nicht alle Sprüheinheiten gleichzeitig arbeiten, sondern dass gezielt d.h. zeit- und mengengerecht und nur wo erforderlich, das Besprühen mit der Schmiermittelsuspension erfolgt. Unnötiger Verlust an Produkt und Kosteneinsparungen sind daher möglich.

Im weiteren ist es zweckmässig, den Verteiler in einer geeigneten Halterung 3 fest oder um die Längsachse 4 des Verteilers drehbar und in bestimmten Winkeln zur betreffenden Achse feststellbar zu lagern. Es ist ebenso möglich, die Halterungen in der Längsachse 4 des Verteilers verschiebbar zu gestalten. Eine exakte Ausrichtung der auf dem Verteiler 1 angebrachten Sprüheinheiten 2, auf das zu besprühende Werkzeug bzw. die Werkfläche, wird damit möglich. Die Drehbewegung kann dabei motorgetrieben über eine übliche Steuerung erfolgen.

Die Speisung der Verteiler 1 und der Sprüheinheiten 2 mit der graphithaltigen Schmiermittelsuspension erfolgt von einem nicht näher dargestellten Tank, der die graphithaltige Schmiermittelsuspension enthält über einen Hochdruck- und Filterteil 7 und eine mit einer programmierbaren Steuerung versehenen Steuer- und Verteileinheit 6. Der Förderdruck liegt dabei zwischen 20 und 100 bar.

Der Hochdruckteil besteht zweckmässig aus einer handelsüblichen Kolbenpumpe,der vorzugsweise ein kontinuierlich arbeitender Drehfilter z.B. gemäss der DE-C-28 23 092, angeschlossen ist. Der Filter hat die Aufgabe Grobpartikel aus der Suspension zu entfernen.

Die Steuer- und Verteileinheit 6 besteht im wesentlichen aus einer handelsüblichen programmierbaren Steuerung, versehen mit den üblichen Steuer- und Messeinrichtungen, die die Funktion hat, die Schmiermittelsuspension mengengerecht, zeitgerecht und mit dem gewünschten Druck zunächst an den Verteiler und dann an die einzelnen Sprüheinheiten zu fördern.

Auch die Druckentlastung und die Spülung des Systems wird über die Steuer- und Verteileinheit geregelt.

In der erfindungsgemäßen Vorrichtung werden vorteilhaft graphithaltige Suspensionen verwendet wie sie in der EP-A 240 825 beschrieben sind.

Die eingangs beschriebene erfindungsgemässe Vorrichtung eignet sich daher besonders zum Besprühen von Flachwalzen beim Walzen von Blechen, zum Besprühen von Profilwalzen beim Walzen von Spezialprofilen wie Geleisen, zum Besprühen von Walzen beim Walzen von Profilen wie H und I-Trägern oder zum Besprühen von Walzen beim Walzen von nahtlosen Rohren.

## Patentansprüche

1. Vorrichtung zum Auftragen von graphithaltigen Schmiermittelsuspensionen auf Werkzeuge oder Werkstücke bei der Warmverformung von Metallen mit Sprüheinheiten, die ein Gehäuse (8) mit Produkteinlass (8), einen Sprühkopf mit einer Lochdüse (9), eine Verschlusseinrichtung (10) und eine Siebeinrichtung (11) aufweisen,
dadurch gekennzeichnet,
- daß ein Verteiler (1) mit zylindrischer Hohlform vorgesehen ist, der mehrere Sprüheinheiten (2) enthält und der durch Halterungen (3) so gehalten ist, daß er fest, in Richtung seiner Längsachse (4) verschiebbar oder um seine Längsachse (4) drehbar ist, wobei er in bestimmten Drehwinkeln feststellbar ist,
- daß der Verteiler (1) in mehrere Kammern unterteilt ist, so daß jeder Sprüheinheit (2) oder einer Gruppe von Sprüheinheiten (2) eine separate Kammer zukommt, und
- daß der Verteiler (1) mit einer Steuer- und Verteileinheit (6) verbunden ist, die mit einer programmierbaren Steuerung versehen ist und an die ein Hochdruck- und Filterteil (7) angeschlossen ist.

2. Verwendung der Vorrichtung nach Anspruch 1 zum Auftragen von graphithaltigem Schmiermittel auf die Werkzeuge und Werkstücke beim Warmwalzen von Blechen, Profilen oder Rohren.

## Claims

1. Device for applying graphite-containing lubricant suspensions to tools or workpieces in the hot-forming of metals with spray units which have a housing (8) with product inlet (8), a spray head with a perforated nozzle (9), a closure device (10) and a screen device (11),
characterized in that
a distributor (1) with cylindrical hollow form is provided, which contains several spray units (2) and which is retained by mountings (3) in such a way that it is fixed, can be moved in the direction of its longitudinal axis (4) or can be rotated about its longitudinal axis (4), it being lockable in certain angles of rotation,
- that the distributor (1) is divided into several chambers so that a separate chamber is allocated to each spray unit (2) or a group of spray units (2), and
- that the distributor (1) is connected to a control and distribution unit (6) which is provided with a programmable control and to which a high pressure and filter part (7) is connected.

2. Use of the device according to Claim 1 for applying graphite-containing lubricant to the tools and workpieces in the hot-rolling of sheets, sections or tubes.

## Revendications

1. Dispositif pour appliquer des suspensions de lubrifiant contenant du graphite sur des outils ou des pièces d'usinage lors du façonnage à chaud de métaux, comportant des unités de pulvérisation formées par un boîtier (8) pourvu d'une entrée (8) pour les produits, d'une tête de pulvérisation pourvue d'une buse à trous (9), d'un dispositif d'obturation (10) et d'un dispositif de filtrage (11), ce dispositif étant caractérisé en ce que :
- il est prévu un distributeur (1) pourvu d'une forme creuse cylindrique, comprenant plusieurs unités de pulvérisation (2), et qui est maintenu par des fixations (3) de manière à être fixe, à pouvoir se déplacer dans la direction de son axe longitudinal (4) ou à pouvoir tourner autour de ce dernier (4), ce distributeur pouvant être réglé suivant des angles d'orientation définis,
- le distributeur (1) est divisé en plusieurs chambres de manière à ce qu'à chaque unité de pulvérisation (2) ou à un groupe d'unités de pulvérisation (2) corresponde une chambre séparée, et
- le distributeur (1) est relié à une unité de commande et de distribution (6) qui est pourvue d'une commande programmable et est reliée à l'unité haute pression et de filtrage (7).

2. Utilisation du dispositif selon la revendication 1 pour appliquer un lubrifiant contenant du graphite sur les outils et les pièces d'usinage lors du laminage à chaud de tôles, de profilés ou de tuyaux.
